# EUROPEAN PATENT APPLICATION

(11) **EP 1 916 093 A2**
(43) Date of publication of application: **30.04.2008**
(21) Application number: 07119442.7
(22) Date of filing: 26.10.2007
(51) Int. Cl.: B29C 70/68, B29K 709/02, B29L 31/10, B29L 31/44

(54) **Method for making multilayer panels for working tops or support planes, or similar and panels so obtained.**

(30) Priority: 27.10.2006 IT PS20060038
(71) Applicant: Canti, Max, 61012 Gradara (PU) (IT)
(72) Inventor: Canti, Max, 61012 Gradara (PU) (IT)
(74) Representative: Negrini, Elena

(57) **Abstract**

A method for making multilayer panels for working tops or support planes or similar, comprises the following steps:
- applying detaching means to the inner faces of a formwork;
- laying at least a first element almost plan into the formwork;
- filling the formwork with filling material;
- making the formwork vibrate in a sussultatory manner, simultaneously with at least the filling, in order to level the filling material;
- pouring uniformly at least a resinous material into the formwork, continuing to make the latter vibrate in a sussultatory manner;
- laying onto the resinous material at least a detaching film extending beyond the edge thereof;
- pressing and heating the formwork.

A multilayer panel, obtained according to the above mentioned method, comprises a filling material in resinous matrix which adheres directly to an almost plan element defining a panel face.

## Description

The present invention relates to method for making working planes for kitchens or support planes for bathroom.

There are many known multilayer panels for the above mentioned plans.

The first type of said panels provides multilayer panels comprising a foam polystyrene layer with a density of about 30 Kg/m³, having one face glued to a stony slab and the other face glued to a plastic reinforced by incorporated fibreglass slab of about 4mm and a polymeric laminated slab of about 1,5-2mm glued thereto.

Despite of the lightest weight of the support, for this type of panels a time consuming gluing operation for the above mentioned four element is needed and they have a high cost due to the polymeric laminated slabs and the plastic reinforced by incorporated fibreglass slabs.

In addiction, the gauging variation due to non-controllable yielding of the polystyrene layer forces to subsequent gauging operations. The breaking module R, according to the UNI EN ISO 10545-4 norms, of said panels is about 6 N/mm².

The second type provides a panel layer of foam polyurethane in substitution of the polystyrene layer with the advantage of the thermal resistance, but with the disadvantage of the high cost and the preventive necessity of the panel gauging before gluing. The braking module R of the latter panels is about 7 N/mm².

The third type of multilayer panels comprises a conglomerate made of expanded porous glass with resin matrix which is glued to a plastic reinforced by incorporated fibreglass layer for balancing with the above mentioned manner. This kind of panels has a high quality but also the disadvantage of the preventive calibration and it has a high cost and weight (with density of about 600 Kg/m³).

The forth type of panels comprises alveolar panels made of stiff plastic material or of honeycomb aluminium type. On a face of these panels a stony slab is glued and on the other face an aluminium slab of about at least 1 mm is glued.

Said multilayer panels have the highest quality and the maximum degree of breaking module equal to about 10 N/mm².

The main disadvantage of said panel is the precarious sealing of the perimetrical borders made of stony slab listels, which are glue to the thin vertical coasts of the alveolar panel, because they cannot match with a continuous support surface.

Another disadvantage is that the gauging with slabs having thickness tolerances of about 0,5 mm is not possible.

Another disadvantage is the high cost of said obtained sandwich.

The main object of the present invention is to propose a multilayer panel in which the support layer is glued directly to the stony slab and simultaneously the fibreglass reinforced slab used for balancing is glued to the support, obtaining the gauging also with thickness tolerances of the stony slab, or fabricating simultaneously slabs having different thickness.

Another object is to propose a multilayer panel with a relevant cost reduction due to the manufacturing and to prefabricated used materials.

Another object is to propose a multilayer panel which allows to use thin slabs made of decorated in transparency glass, said slabs could not be glued under a press because of their fragility.

Other object is to propose a lightweight panels sandwich with a breaking module R equal to the multilayer panel obtained with the known alveolar system, and thus of the highest possible quality.

A further object is to propose a multilayer panel provided with a slab made of a similar material for the production rejects which can be crushed and used as inerts for the building industry, reducing the environmental impact and the cost for separating the elements constituting the sandwiches or multilayer panels.

The method for making multilayer panels for working or support planes object of the present invention initially provides to apply detaching means (like wax) onto the inner faces of a formwork, possibly made of aluminium, because of the high thermal conductivity thereof.

Subsequently a first almost plan element, like a stony, ceramic, glass or conglomerate slab or a glass fibres mat or a glass net, is laid onto the bottom of the formwork, with the visible finished face turned towards the bottom of the formwork, avoiding to glue this face.

Said formwork is filled with filling material, possibly with expanded glass grains, which is levelled also by means of sussultatory vibration of the formwork. Subsequently a resinous bicomponent polyurethane material is poured in the formwork onto the filling material, maintaining the formwork in sussultatory vibration, in such a way that the resin, by gravity, spreads among the glass grains until reaching the bottom.

Thereafter a second almost plan element, like a stony, ceramic, glass or conglomerate slab or a glass fibres mat or a glass net, is laid on the resinous material and subsequently a detaching film, which extends beyond the formwork edges, is laid thereon

The formwork is then put into a heating press, i.e. of multi-room type, fit to maintain open a room while the others are under pressure, allowing a continuous and parallel manufacturing process.

One can use also mono-room press or formwork having clamping and/or hinging means fit to allow the pressure without using presses.

In case of using presses, the press plan goes down upon the formwork pressing the edges delimiting the final thickness of the multilayer panel forcing the grains to be steady during the expansion phase caused by heating.

The resinous material during the expansion spreads in the cavity between the stopped grains filling all the space among them impregnating the glass mat or net. In this way the reticulation takes place.

In this way the strong gluing of the stony slab, the formation of a support layer perfectly closed, the formation and simultaneous gluing of the glass-fibre-reinforced plastic slab for balancing are obtained.

The resinous material usually used is in percentage equal to the 30% in weight or equal to the 10% by volume, obtaining thus a conglomerate of about 300 Kg/m³ and a multilayer panel having a breaking module R of over 10 N/mm².

The flexibility and thus the stiffness of the support may be determined by mixing in a proper way the two component the resinous material is made thereof. The optimal ratio is equal to 1:1,4, where the first number refers to the quantity of polyvalent alcohol and the second one refers to the diisocyanate. With a ratio equal to 1:1 the maximum degree of elasticity is obtained, while with a ratio equal to 1:2 the maximum degree of stiffness is obtained.

The bicomponent resinous material preferably used is of the type which remains in a fluid creamy state for at least 3 minutes at environmental temperature, and it may dilates with the formwork cooling before the use.

The resinous material distribution may be obtained by means of several closely displaced nozzles, moving over the formwork or vice versa.

Alternatively the invention provides that the distribution of the resinous material over the formwork is made by only a distributing nozzle connected to a X, Y plotter which moves the nozzle over the formwork surface.

A variant of the present method provides to use inferior quantity of bicomponent resinous material and increasing the expansion property thereof by nebulizing water over the formwork before laying down the detaching film, in order to avoid that little portions remain non perfectly attached.

Another variant of the present invention provides to reverse the temporal order of the above mentioned method and thus provides the following steps:
- applying detaching means to the inner faces of a formwork;
- laying onto the formwork at least a detaching film;
- laying into the formwork a first almost plan element, like a glass mat or a net or a slab;
- pouring uniformly at least a resinous material into the formwork;
- depositing a predefined quantity of filling material onto the resinous material;
- laying onto the filling material a second almost plan element like a stony, ceramic, conglomerate, or composite material slab;
- pressing and heating the formwork.

A variant of the above method provides to pour the resinous material into the formwork after having deposited the predefined quantity of filling material.

For the above two variants it is necessary to dose in a correct way the filling material to be deposited in the formwork.

Another variant of the method provides to deposit into the formwork a filling material comprising coarse-grain grains made of cereals, maize, legumes, seeds, stones, thermoplastic granulates for injections, minerals, sawdust pellet, hemp stuff (the so called "canapulo"), in combination with hemp mat or similar.

The multilayer panel obtained with the method object of the present invention may be conveniently used, for working tops for kitchens, support planes for bathrooms, outdoor tables or furnishings, bar or food shop counters, lift floors, steps and window thresholds, and thanks to the thermal insulating properties this type of panel can be used also for cold-storage room and building coating.

The main advantage of the present invention is to provide a multilayer panel in which the support layer is glued directly to the stony slab and simultaneously the plastic reinforced by incorporated fibreglass slab for the balancing is glued to the support, obtaining the calibration also with thickness tolerances of the stony slab, or fabricating simultaneously slabs of different thickness.

Another advantage is to provide a multilayer panel with an important cost reduction due to the manufacturing and to prefabricated used materials.

An other advantage is to provide a multilayer panel which allows to use thin slabs made of decorated in transparency glass, said slabs cannot be glued under a press because of their fragility.

Other advantage is to provide a lightweight panels sandwich with a breaking module R equal to the multilayer panel obtained with the known alveolar system, and thus of the highest possible quality.

A further advantage is to provide a multilayer panel provided with a slab made of a similar material for the production rejects which can be crushed and used as inerts for the building industry, reducing the environmental impact and the cost for separating the elements constituting the sandwich.

## Claims

1. Method for making multilayer panels for working tops or support planes or similar, **characterised in that** it comprises at least the following steps:
- applying detaching means to the inner faces of a formwork;
- laying at least a first element almost plan into the formwork;
- filling the formwork with filling material;
- making the formwork vibrate in a sussultatory manner, simultaneously with at least the filling, in order to level the filling material;
- pouring uniformly at least a resinous material into the formwork, continuing to make the latter vibrate in a sussultatory manner;
- laying onto the resinous material at least a detaching film extending beyond the edge thereof;
- pressing and heating the formwork.

2. Method according to claim 2 **characterized in** laying onto the resinous material, before applying the detaching film, at least a second almost plan element.

3. Method for making multilayer panels for working tops or support planes or similar, **characterised in that** it comprises at least the following steps:
- applying detaching means to the inner faces of a formwork;
- laying onto the formwork at least a detaching film;
- laying into the formwork at least a first almost plan element;
- pouring uniformly at least a resinous material into the formwork;
- depositing a predefined quantity of filling material onto the resinous material;
- pressing and heating the formwork.

4. Method according to claim 3 **characterized in** laying onto the filling material, before pressing the formwork, at least a second almost plan element.

5. Method according to claim 3 or 4 **characterised in** depositing the filling material before pouring the resinous material

6. Method according to any of the previous claims **characterised in** using a first element almost plan made of a stony, ceramic, glass, conglomerate or composite material slab.

7. Method according to any of the previous claims **characterised in** using a second element almost plan made of a stony, ceramic, glass, conglomerate or composite material slab.

8. Method according to any of the previous claims 1-5 or 7 **characterised in** using a first element comprising at least a mat, a fabric, a net made of glass or generally inextensible fibres fit to be impregnated by the resinous material

9. Method according to any of the previous claims 1-6 or 8 **characterised in** using a second element comprising at least a mat, a fabric, a net made of glass or generally inextensible fibres fit to be impregnated by the resinous material

10. Method according to any of the previous claims **characterised in** pouring a polyurethane bicomponent resinous material.

11. Method according to any of the previous claims **characterised in** pouring into the formwork the resinous material of about 30% in weight or about 10% in volume.

12. Method according to claim 10 or 11 **characterised in** using a bicomponent resinous material with a percentage ratio from 1:1 to 1:2, preferably equal to 1:1,4, where the first component is polyvalent alcohol, and the second component is diisocyanate.

13. Method according to any of the previous claims **characterised in** nebulizing water onto the formwork before laying the detaching film thereon.

14. Method according to any of the previous claims **characterised in** pressing and heating the formwork inserting in a heating mono-room or multi-room press.

15. Method according the claim 14 **characterised in that** the heating press is of the multi-room type fit to maintain open only a room while the others are under pressure, allowing a continuous and parallel manufacturing process.

16. Method according to any of the previous claims 1-13 **characterised in that** the pressure of the formwork is made by formwork clamping and/or hinging means.

17. Method according to any of the previous claims **characterised in** pouring uniformly the resinous material into the formwork by means of distributing nozzles moving along the formwork, or vice versa.

18. Method according to any of the previous claims **characterised in** pouring uniformly the resinous material into the formwork by means of a distributing nozzle fixed to a plotter which moves said nozzle on the formwork surface, or vice versa.

19. Method according to any of the previous claims **characterised in** filling the formwork with filling material comprising expanded glass grains.

20. Method according to claim 19 **characterised in that** the grains have granulometry comprised between 2mm and 8mm, preferably between 2mm and 4 mm.

21. Method according to any of the previous claims 1-18 **characterised in** filling the formwork with filling material comprising coarse-grain grains made of cereals, maize, legumes, seeds, stones, or their derivatives and discarded, thermoplastic granulates for injections, minerals, sawdust pellet, hemp stuff, in combination with hemp mat or similar.

22. Method according to claims 1 and 2 or 3 and 4 **characterised in** laying the element almost plan, first or second, with the visible finished face opposite to the filling material

23. Multilayer panel obtained according to any of the previous claims **characterised in** comprising at least a filling material in resinous matrix which adheres directly to at least an almost plan element defining a panel face.

24. Use of a panel of the claim 23 for working tops of kitchens, support plane for bathrooms, outdoor tables or furnishings, bar or food shop counters, lift floors, steps and window thresholds, and thanks to the thermal insulating properties this panel can be used also for cold-storage room and building coating.
